# EUROPEAN PATENT APPLICATION

(11) **EP 2 346 054 A2**
(43) Date of publication of application: **20.07.2011**
(21) Application number: 10166069.4
(22) Date of filing: 15.06.2010
(51) Int. Cl.: H01G 9/20

(54) **Photoelectric Conversion Module**

(30) Priority: 19.01.2010 US 296421 P; 14.05.2010 US 780817
(71) Applicant: Samsung SDI Co., Ltd., Gyeonggi-do (KR)
(72) Inventor: Yang, Nam-Choul, Gyeonggi-do (KR); Lee, Jong-Ki, Gyeonggi-do (KR); Kim, Sung-Su, Gyeonggi-do (KR)
(74) Representative: Walaski, Jan Filip

(57) **Abstract**

A photoelectric conversion module comprises first and second substrates and a sealing layer between the first and second substrates defining a plurality of photoelectric cells, wherein the sealing layer includes one or more openings for filling the photoelectric cells with electrolyte.

## Description

The present invention relates to a photoelectric conversion module, and more particularly, to a photoelectric conversion module having an improved structure for sealing electrolyte.

Recently, research into photoelectric conversion modules that convert optical energy into electric energy as a source of energy that may substitute for fossil fuel has been conducted, and solar batteries using solar light have been investigated.

Research on various types of solar batteries has been conducted. In addition, silicon or crystalline solar batteries formed as wafers using semiconductor p-n junctions are widely distributed, however, fabrication costs are high due to the need to deal with semiconductor materials of high purity.

Unlike silicon solar batteries, dye-sensitized solar batteries include a photosensitive dye receiving light of a wavelength in the visible band for generating excited electrons, a semiconductor material receiving the excited electrons, and an electrolyte reacting with the electrons returning from an external circuit. The dye-sensitized solar batteries are considered as next generation solar batteries due to a photoelectric conversion efficiency which is much greater than that of conventional solar batteries.

One or more embodiments of the present invention include a photoelectric conversion module having improved durability and reliability, and being mass-produced.

According to the invention, there is provided a photoelectric conversion module, comprising first and second substrates and a sealing layer between the first and second substrates defining a plurality of photoelectric cells, wherein the sealing layer includes one or more openings for filling the photoelectric cells with electrolyte. The photoelectric conversion module may further comprise first sealing means for sealing each of the one or more openings. The first sealing means may comprise a sealing material in the one or more openings.

The photoelectric conversion module may further comprise a sealing member disposed against the first sealing means to further seal the one or more openings.

The second substrate may include a first surface that extends beyond a peripheral edge of the first substrate and is arranged to receive the sealing member, the sealing member being arranged on the first surface to seal the peripheral edge of the first substrate. The photoelectric conversion module may further comprise second sealing means arranged between the sealing member and the first sealing means.

The second sealing means may comprise a first portion between a first surface of the sealing member and the first surface of the second substrate, and a second portion on a second surface of the sealing member facing the peripheral edge of the first substrate and a peripheral edge of the sealing layer. The first and second portions may comprise a continuous structure.

The second sealing means may further comprise an adhesive layer and a blocking layer for preventing leakage of the electrolyte. The blocking layer may be sandwiched between first and second adhesive layers.

The photoelectric conversion module may further comprise a photo electrode on the first substrate, a counter electrode on the second substrate, a catalyst layer on the counter electrode and a semiconductor layer including a photosensitive dye in each of the photoelectric cells. The photoelectric conversion module may further comprise connecting members disposed between neighbouring photoelectric cells to electrically connect the photoelectric cells to one another, wherein the connecting members extend between the first and second substrates and are arranged to connect a photoelectrode of one cell to the counter electrode of the neighbouring cell.

The sealing layer may comprises a plurality of openings, each opening corresponding to one of the plurality of photoelectric cells.

The plurality of photoelectric cells may be longitudinally arranged between the substrates, and the sealing layer may have a peripheral wall that comprises two substantially parallel long walls and two substantially parallel short walls, and the plurality of openings may be arranged along one of the short walls of the sealing layer.

The connecting members may extend along the length of the photoelectric cells in a portion of the sealing layer between neighbouring cells.

In embodiments of the present invention, it is not necessary to form holes in a substrate in order to inject an electrolyte into the substrate, and thus, fabrication costs of the substrate are reduced, and fabrication processes are simplified to increase production yield. In addition, degradation of rigidity of the substrate due to the holes in the substrate is prevented, and durability of the photoelectric conversion module is improved.

In embodiments of the present invention, a sealing block is attached along a side of the substrate, in which electrolyte injecting portions are formed, and thus, a double-sealing structure is formed. Therefore, infiltration of external impurities is prevented, and deterioration or leakage of the electrolyte may be prevented effectively.

Reference will now be made in detail to embodiments, examples of which are illustrated in the accompanying drawings, wherein like reference numerals refer to the like elements throughout.
FIG. 1 is a plan view of a photoelectric conversion module according to an embodiment of the present invention;
FIG. 2 is a cross-sectional view of the photoelectric conversion module taken along line II-II' of FIG. 1;
FIG. 3 is an exploded perspective view of the photoelectric conversion module shown in FIG. 1;
FIG. 4 is a perspective view showing an assembled state of a sealing block shown in
FIG. 3;

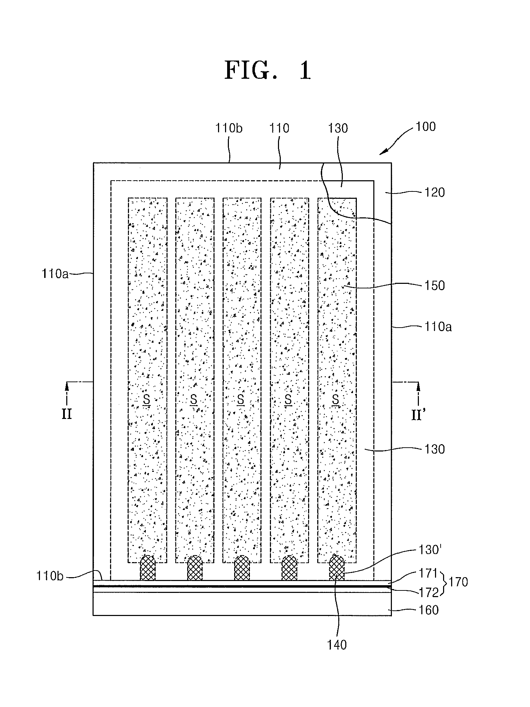

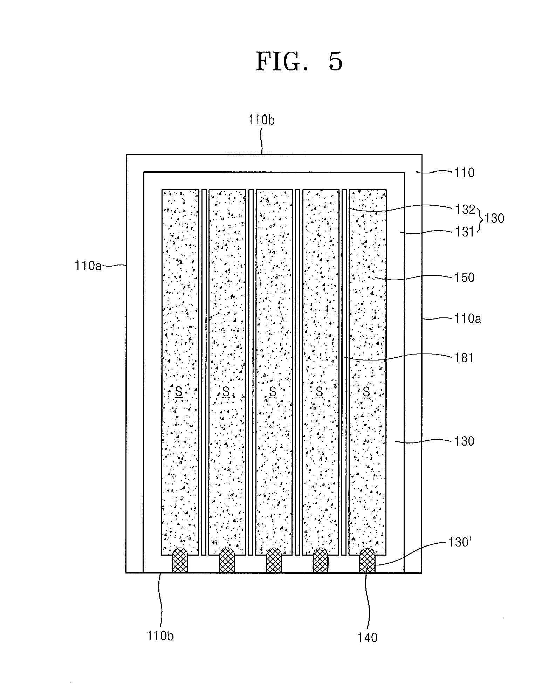

FIG. 5 is a plan view of a sealing member shown in FIG. 1;

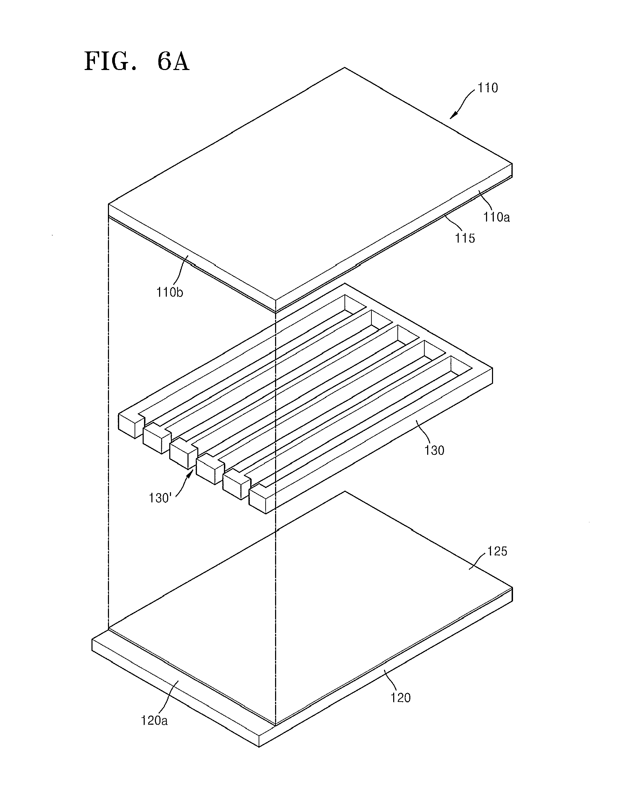

FIGS. 6A through 6C are diagrams illustrating processes of fabricating the photoelectric conversion module of FIG. 1; and

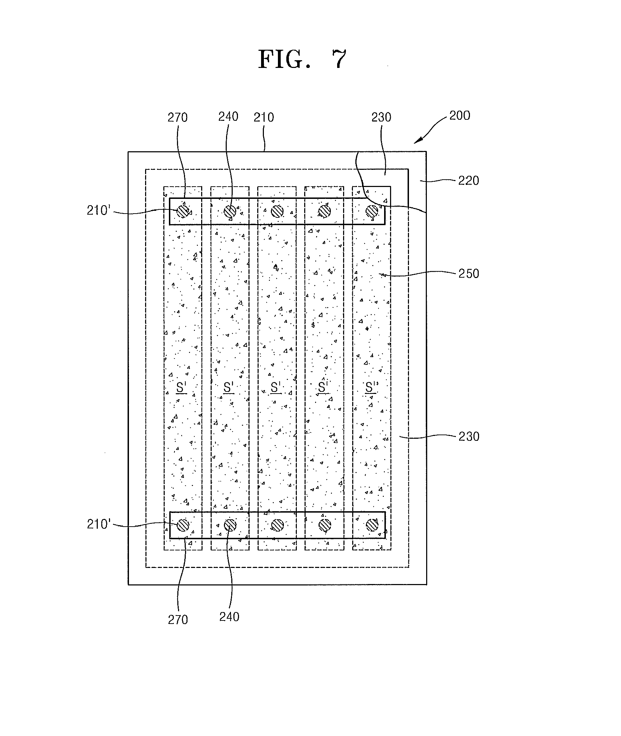

FIG. 7 is a plan view of a photoelectric conversion module according to a comparative example.
FIG. 1 shows a planar structure of a photoelectric conversion module 100 according to an embodiment of the present invention. Referring to FIG. 1, the photoelectric conversion module 100 includes a plurality of photoelectric cells S, and a sealing member 130 is disposed between neighboring photoelectric cells S. For example, each of the photoelectric cells S is connected to neighboring photoelectric cell S in series or in parallel via a connection member (not shown), and physically supported between a light receiving substrate 110 and counter substrates 120 to be modulated.

An electrolyte 150 is filled in each of the photoelectric cells S, and the electrolyte 150 filled in the photoelectric cells S is sealed by the sealing member 130 that is disposed along a boundary of the photoelectric conversion module 100 and between the neighboring photoelectric cells S. The sealing member 130 is formed around the electrolyte 150 so as to surround the electrolyte 150, and seals the electrolyte 150 in order to prevent leakage of the electrolyte 150.

The light receiving substrate 110 may be formed as a rectangle having long side portions 110a extending in parallel with each other, and short side portions 110b extending in parallel with each other perpendicularly to the long side portions 110a. Here, some parts of the sealing member 130 are open along a side of the light receiving substrate 110, for example, the short side portion 110b, to provide electrolyte injecting portions 130', which correspond to the photoelectric cells S. The electrolyte 150 is injected into the photoelectric conversion module 100 through the electrolyte injection portions 130'. After injecting the electrolyte 150, the electrolyte injection portions 130' are filled with sealing paste to form injecting portion sealing member 140. Since the electrolyte 150 is injected through the electrolyte injection portions 130' and the injection portion sealing member 140 seals the electrolyte injection portions 130' after finishing the injection operation of the electrolyte 150, a specialized compressing device for injecting electrolyte, for example, a syringe, is not necessary in order to inject the electrolyte 150. In addition, after finishing the injecting operation of the electrolyte 150, the electrolyte injecting portions 130' are sealed by the injecting portion sealing member 140, and thus, the sealing of the injecting portions 130' may be easily performed.

In alternative embodiments of the invention, there may be a single opening or electrolyte injection portion 130', with some arrangement permitting the electrolyte to flow between the plurality of cells, for example, an internal channel between the cells or internal openings in the cell walls.

The injecting portion sealing member 140 may be anything that seals the electrolyte 150, for example, a resin or a glass frit. In more detail, the injecting portion sealing member 140 may be formed of a material that is selectively flexible according to temperature environment. For example, the injecting portion sealing member 140 may be formed of a material that is sufficiently flexible to be applied on the electrolyte injecting portions 130' at a high temperature, and is hardened to seal the electrolyte injecting portions 130' at an operating temperature range. In more detail, the injecting portion sealing member 140 may be formed of a resin material such as an acrylic-based resin, an epoxy-based resin, a silicon-based resin, an olefin-based resin, and an olefin-acrylate based resin, or a glass frit. However, the injecting portion sealing member 140 may be formed of a photosensitive material that has a flexibility varying depending on light irradiation, as well as the temperature sensitive material that has a flexibility varying depending on the temperature environment.

A sealing block 160 is disposed on an outer portion of the injecting portion sealing member 140. The sealing block 160 is disposed along the short side portion 110b in which the sealing block 160 is formed to seal the electrolyte sealing portions 130'. That is, the sealing block 160 contacts the short side portion 110b of the light receiving substrate 110 so as to seal the electrolyte injecting portions 130'. Thus, the sealing block 160 forms a double-sealing structure with the injecting portion sealing member 140.

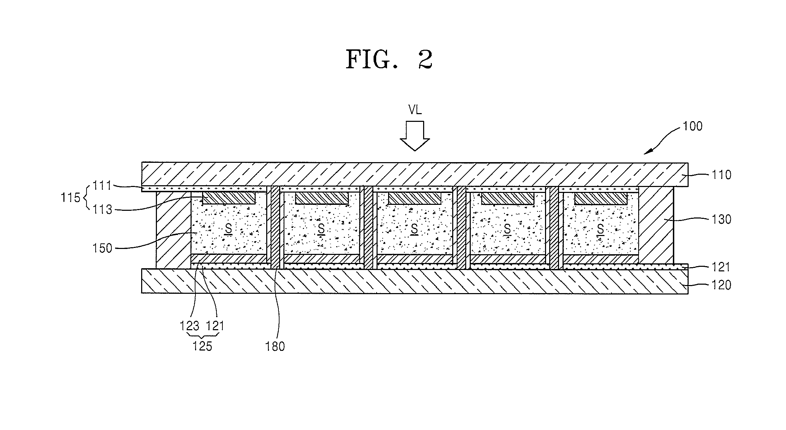

FIG. 2 is a cross-sectional view of the photoelectric conversion module 100 taken along line II-II' of FIG. 1. Referring to FIG. 2, the photoelectric conversion module 100 includes the light receiving substrate 110 and the counter substrate 120 facing each other. In addition, the plurality of photoelectric cells S which are defined by the sealing member 130 are formed between the two substrates 110 and 120. In addition, connecting members 180 are disposed between the neighboring photoelectric cells S to connect the photoelectric cells S to each other, for example, in series.

A photo electrode 111 and a counter electrode 121 are respectively formed on the light receiving substrate 110 and the counter substrate 120, and the light receiving substrate 110 and the counter substrate 120 are attached to each other with a predetermined gap therebetween as interposing the sealing member 130. A semiconductor layer 113, on which a photosensitive dye that is excited by light is adhered, is formed on the photo electrode 111, and the electrolyte 150 is disposed between the semiconductor layer 113 and the counter electrode 121.

The light receiving substrate 110 may be formed of a transparent material having a high light transmittance. For example, the light receiving substrate 110 may be formed of a glass or a resin film. The resin film is generally flexible, and thus, is suitable for usages requiring flexibility.

The photo electrode 111 performs as a negative electrode of the photoelectric conversion module 100. In more detail, the photo electrode 111 collects the electrons that are generated bv the photoelectric conversion operation to provide a current path. The light VL incident through the photo electrode 111 acts to excite the photosensitive dye adhered on the semiconductor layer 113. The photo electrode 111 may be formed of a transparent conducting oxide (TCO) such as an indium tin oxide (ITO), a fluorine doped tin oxide (FTO), or an antimony doped tin oxide (ATO). The photo electrode 111 may further include a metal electrode such as gold (Au), silver (Ag), or aluminum (Al) having excellent electric conductivity.

The metal electrode is introduced in order to reduce the electrical resistance of the photo electrode 111, and may be formed in a stripe pattern or a mesh pattern. The semiconductor layer 113 may be formed of a semiconductor material that is conventionally used as a photoelectric conversion device, for example, an oxide material of metal such as cadmium (Cd), zinc (Zn), indium (In), lead (Pb), molybdenum (Mo), tungsten (W), antimony (Sb), titanium (Ti), Ag, manganese (Mn), tin (Sn), zirconium (Zr), strontium (Sr), gallium (Ga), silicon (Si), or chromium (Cr). The semiconductor layer 113 may increase the photoelectric conversion efficiency due to the photoelectric dye attached thereon. For example, the semiconductor layer 113 may be formed by applying a paste, in which semiconductor particles each having a diameter of about 5 nm to about 1000 nm are dispersed, on the substrate 110 on which the photo electrode 111 is formed, and then, performing a heating process or a compressing process for applying a predetermined heat or pressure onto the paste.

The photosensitive dye attached on the semiconductor layer 113 absorbs the light VL that is incident by transmitting through the light receiving substrate 110, and then, electrons of the photosensitive dye are excited from a base state to an excitation state. The excited electrons are transited to a conduction band of the semiconductor layer 113 by an electronic bonding between the photosensitive dye and the semiconductor layer 113, and reach the photo electrode 111 after passing through the semiconductor layer 113. After that, the electrons are withdrawn to outside via the photo electrode 111 to form a driving current that drives an external circuit.

For example, the photosensitive dye attached on the semiconductor layer 113 includes molecules that absorb the light of visible wavelengths and accelerate the transition of electrons to the semiconductor layer 113 in the excitation state. The photosensitive dye may be a liquid phase, a gel phase, or a solid phase. For example, the photosensitive dye attached on the semiconductor layer 113 may be a ruthenium-based photosensitive dye. When the substrate 110 on which the semiconductor layer 113 is formed is immersed in a solution including a predetermined photosensitive dye, the semiconductor layer 113 on which the photosensitive dye is attached may be obtained.

The electrolyte 150 may be Redox electrolyte that includes a pair of oxidant and reductant, and a solid type electrolyte, a gel type electrolyte, or a liquid type electrolyte may be used as the electrolyte 150.

The counter substrate 120 facing the light receiving substrate 110 does not particularly need to be transparent, however, may be formed of a transparent material for receiving light from both sides in order to increase the photoelectric conversion efficiency, and in particular, may be formed of the same material as the light receiving substrate 110. In particular, when the photoelectric conversion module 100 is utilized as a building integrated photovoltaic (BIPV) that is installed in a structure such as window frame, the photoelectric conversion module 100 is transparent on both sides in order not to block the light VL.

The counter electrode 121 performs as a positive electrode of the photoelectric conversion module 100. The photosensitive dye attached on the semiconductor layer 113 is excited on receiving the light VL, and the excited electrons are withdrawn to outside via the photo electrode 111. On the other hand, the photosensitive dye losing the electrons is reduced by collecting the electrons that are provided by oxidation of the electrolyte 150, and the oxidised electrolyte 150 is reduced by the electrons reaching the counter electrode 121 via the external circuit. Then, the operations of the photoelectric conversion are completed.

For example, the counter electrode 121 may be formed of the TCO such as the ITO, FTO, or ATO that is a transparent material having good electrical conductivity. The counter electrode 121 may further include a metal electrode such as Ag, Au, or Al having an excellent electrical conductivity. The metal electrode is introduced in order to reduce the resistance of the counter electrode 121, and may be formed in a stripe pattern or a mesh pattern.

A catalyst layer 123 may be formed on the counter electrode 121. The catalyst layer 123 is formed of a material having a reduction catalyst function for providing electrons, for example, a metal material such as platinum (Pt), Ag, Au, copper (Cu), or Al, a metal oxide such as a tin oxide, or a carbon-based material such as graphite. The sealing member 130 formed between the light receiving substrate 110 and the counter substrate 120 maintains a constant distance between the light receiving substrate 110 and the counter substrate 120, and at the same time, defines the plurality of photoelectric cells S that are disposed between the two substrates 110 and 120. In addition, the sealing member 130 surrounds the electrolyte 150 injected in the photoelectric conversion module 100 to seal the electrolyte 150. The sealing member 130 may be formed of a thermosetting resin such as epoxy, a thermoplastic resin such as ionomer, a photocurable resin such as an ultraviolet (UV)-curable epoxy.

The connection member 180 that electrically connects the photoelectric cells S to each other is disposed adjacent to the sealing member 130. For example, the connection member 180 may be formed within a receipt space that is defined by the sealing member 130, and may penetrate through the sealing member 130. The connection member 180 is vertically extended so as to reach the photo electrode 111 and the counter electrode 121 that are disposed on upper and lower portions of the connection member 180, and connects the photo electrode 111 and the counter electrode 121 of the neighboring photoelectric cells S to connect the cells S in series. The connection member 180 may be formed of a metal material having an excellent conductivity. A conductive paste is filled in a space defined in the sealing member 130 in order to form the connection member 180.

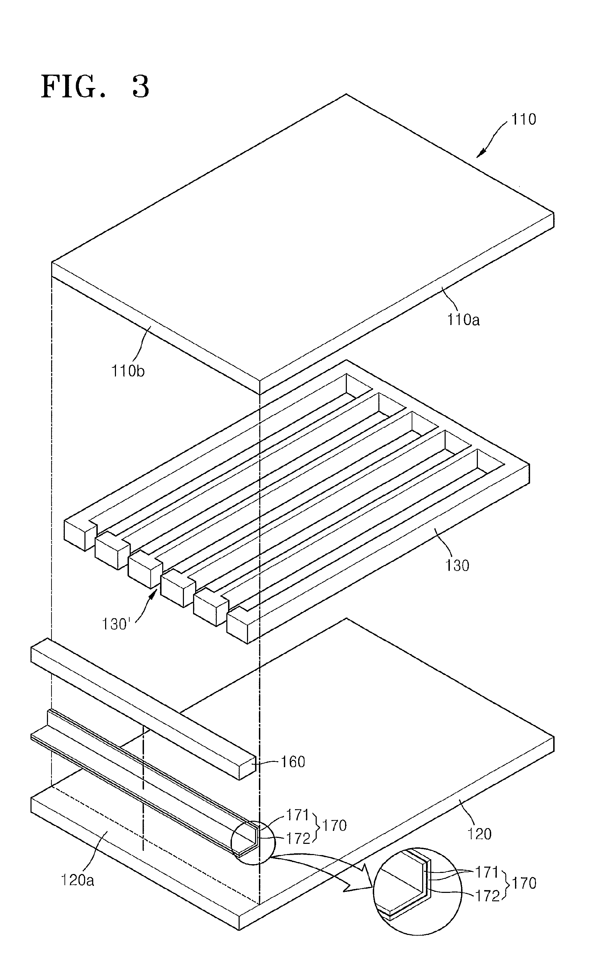

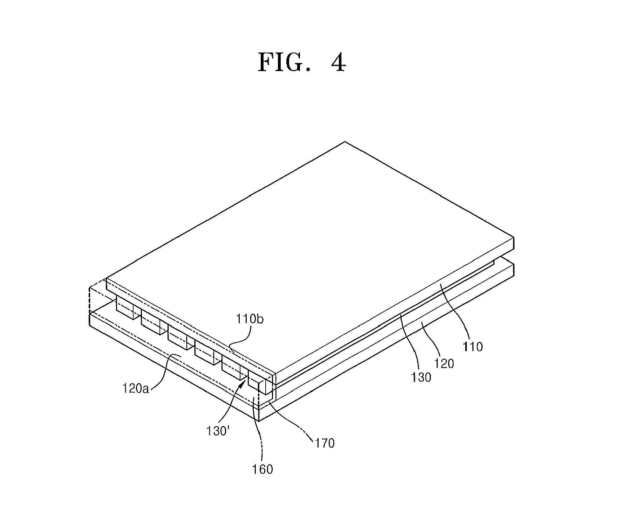

FIGS. 3 and 4 are views showing exploded and assembled states of the sealing block 160. For the sake of convenience, functional layers (115 and 125, refer to FIG. 2) that are formed on the light receiving substrate 110 and the counter substrate 120 for performing the photoelectric conversion operations, for example, the photo electrode 111, the counter electrode 121, the semiconductor layer 113, and the catalyst layer 123 are not shown in FIGS. 3 and 4.

Referring to FIGS. 3 and 4, the light receiving substrate 110 and the counter substrate 120 are attached to each other by interposing the sealing member 130 therebetween so as to face each other. Here, the light receiving substrate 110 and the counter substrate 120 are coupled to each other so that an edge of the counter substrate 120 is exposed to the outer side of the light receiving substrate 110. In addition, the sealing block 160 is disposed on the part of the counter substrate 120, which is exposed from the side of the light receiving substrate 110. The sealing block 160 contacts surfaces 110b and 120a of exposed portions of the light receiving substrate 110 and the counter substrate 120, in particular, contacts a side surface 110b of the light receiving substrate 110 and an upper surface 120a of the counter substrate 120. The sealing block 160 may be formed as a square pillar so as to adhere closely to the exposed surfaces of the light receiving substrate 110 and the counter substrate 120. However, the sealing block 160 may be formed as various shapes with various materials if it may seal the electrolyte injecting portions 130', for example, the sealing block 160 may be formed of a plastic material, a glass material, or a metal material.

A sealing material 170 is disposed along the exposed surfaces 110b and 120a of the light receiving substrate 110 and the counter substrate 120, and the sealing block 160 is coupled to the exposed surfaces 110b and 120a as interposing the sealing material 170. The sealing material 170 may include an adhering sheet 171 for attachment between the exposed surfaces 110b and 120a and the sealing block 160, and may further include a blocking sheet 172 for preventing the leakage of the electrolyte 150 if necessary. The adhering sheet 171 may be formed of a resin film having an adhesive characteristic, and the blocking sheet 172 may be formed of a metal thin plate, for example, an Al thin plate. The blocking sheet 172 may be sandwiched between first and second adhesive layers 171.

FIG. 5 shows a planar structure of the sealing member 130. Referring to FIG. 5, the sealing member 130 extends along the long side portion 110a and the short side portion 110b of the light receiving substrate 110 so as to from a space for receiving the electrolyte 150, and extends toward the inner area of the substrate 110 so as to define the plurality of photoelectric cells S that are arranged between the light receiving substrate 110 and the counter substrate 120. In more detail, the sealing member 130 includes a first portion 131 extending to surround the long side portions 110a and the short side portions 110b, and second portions 132 formed on the inner area of the substrate 110 to define the photoelectric cells S. The electrolyte injecting portions 130' are formed in a side of the first portion 131 extending along the long side portions 110a and the short side portions 110b, for example, a short side portion 110b. After finishing the injection of electrolyte 150, the injecting portion sealing member 140 is formed to prevent the leakage of the electrolyte 150. On the other hand, receiving spaces 181 for receiving the connecting members 180 that electrically connect the neighboring photoelectric cells S to each other may be formed in the second portions 132 of the sealing member 130.

FIGS. 6A through 6C are exploded perspective views illustrating processes of fabricating the photoelectric conversion module 100. Referring to FIG. 6A, the light receiving substrate 110 and the counter substrate 120, on which the functional layers 115 and 125 for performing the photoelectric conversion are respectively formed, are prepared. For example, the functional layers 115 and 125 may include the semiconductor layer 113 receiving the light for generating excited electrons, the photo electrode 111 and the counter electrode 121 for forming current paths of the generated electrons, and the catalyst layer 123 for performing catalyst operation of the electrolyte 150.

Next, the light receiving substrate 110 and the counter substrate 120 are disposed to face each other, the sealing member 130 is disposed between the substrates 110 and 120, and then, the substrates 110 and 120 are attached to each other by applying predetermined heat and pressure onto the substrates 110 and 120. Here, the sealing member 130 may provide the electrolyte injecting portions 130' by using openings formed along a side thereof.

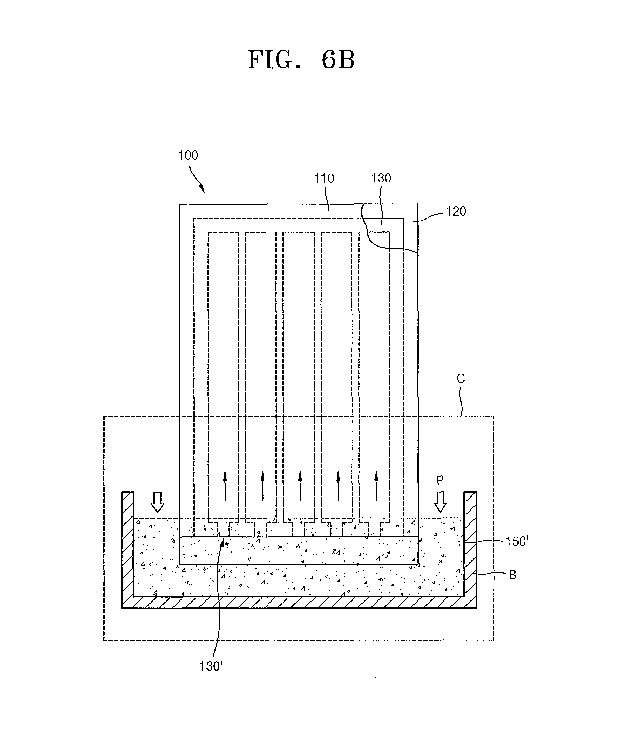

In addition, the electrolyte 150 is injected through the electrolyte injecting portions 130'. For example, as shown in FIG. 6B, a substrate assembly 100' including the attached light receiving substrate 110 and the counter substrate 120 is stood upright, and soaked in a tub B, in which an electrolyte solution 150' is filled, in a state where the electrolyte injecting portions 130' face downward. Here, the injecting operation of the electrolyte 150 may be executed in a sealed chamber C, for example, under an atmosphere an inert gas is filled in the chamber C at a predetermined gas pressure P. Here, the electrolyte solution 150' in the tub B may be injected into the substrate assembly 100' due to the gas pressure P.

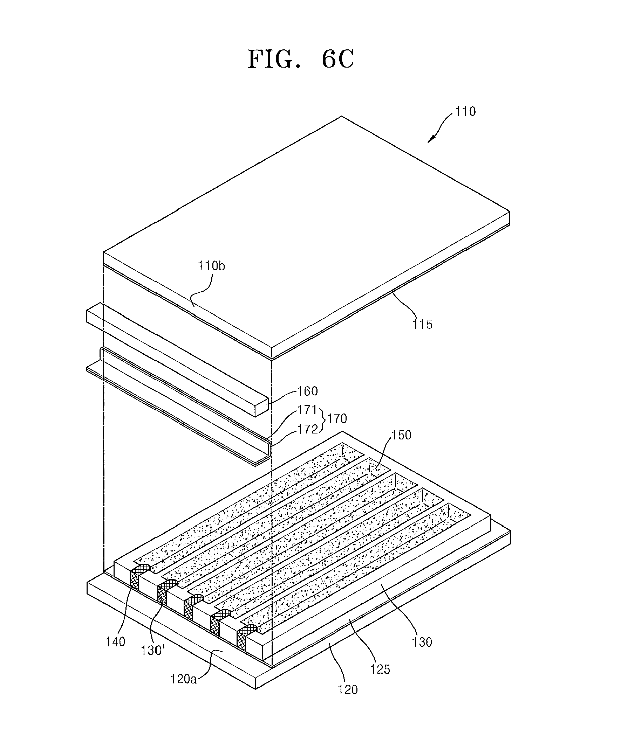

Then, after finishing the injection of electrolyte 150, the sealing operation of the electrolyte injecting portions 130' is performed. For example, as shown in FIG. 6C, the injecting portion sealing members 140 are formed on the electrolyte injecting portions 130' to seal the injecting portions 130'. In addition, the sealing block 160 is attached to outer portions of the injecting portion sealing members 140. For example, the sealing block 160 is attached onto the part of the counter substrate 120 exposed under the light receiving substrate 110. Here, the sealing block 160 may be attached onto the side surface of the light receiving substrate 110 and the upper surface of the counter substrate 120 as interposing the sealing material 170.

FIG. 7 shows a planar structure of a photoelectric conversion module 200 according to a comparative example. Referring to FIG. 7, the photoelectric conversion module 200 includes a first substrate 210 and a second substrate 220 attached to each other, and a plurality of photoelectric cells S' arranged between the first and second substrates 210 and 220. A sealing member 230 is disposed between the first and second substrates 210 and 220. The sealing member 230 extends boundaries of the first and second substrates 210 and 220 to form a space in which an electrolyte 250 will be injected, and extends to an inner space between the first and second substrates 210 and 220 to define the plurality of photoelectric cells S'.

Electrolyte injecting holes 210' are formed in the first substrate 210 for injecting the electrolyte. The electrolyte injecting holes 210' are formed on locations corresponding to the photoelectric cells S', for example, may be formed as a pair per each of the photoelectric cells S'. After finishing the injection of the electrolyte, sealing plugs 240 are inserted in the electrolyte injecting holes 210', or a sealing cap 270 that extends throughout the electrolyte injecting holes 210' in a row may seal the electrolyte injecting holes 210'.

In the photoelectric conversion module 200 according to the comparative example, the electrolyte 250 is injected through the electrolyte injecting holes 210' that are relatively narrower than those of the embodiments of the present invention, and thus, an additional compressing unit such as a syringe is necessary. In addition, since the plurality of injecting holes 210' are formed in the substrate 210, fabrication costs of the substrate increase and strength of the substrate is degraded. In addition, the sealing operation is performed with respect to each of the electrolyte injecting holes 210', and thus, the number of processes increases. In the photoelectric conversion module 100 of FIG. 1, the electrolyte 150 is injected via the electrolyte injecting portions 130' which are opened along the short side portion 110b of the substrate 110, and thus, the injection of electrolyte 150 may be performed easily without using an additional compressing unit. In addition, holes are not formed in the substrate, and thus, high rigidity of the substrate 110 or 120 may be maintained.

It should be understood that the exemplary embodiments described therein should be considered in a descriptive sense only and not for purposes of limitation. Descriptions of features or aspects within each embodiment should typically be considered as available for other similar features or aspects in other embodiments.

## Claims

1. A photoelectric conversion module, comprising:
first and second substrates (110, 120); and
a sealing layer (130) between the first and second substrates defining a plurality of photoelectric cells (S);
wherein the sealing layer (130) includes one or more openings (130') for filling the photoelectric cells with electrolyte (150).

2. The photoelectric conversion module of claim 1, further comprising first sealing means (140) for sealing each of the one or more openings.

3. The photoelectric conversion module of claim 2, wherein the first sealing means (140) comprises a sealing material in the one or more openings.

4. The photoelectric conversion module of claim 2 or 3, further comprising a sealing member (160) disposed against the first sealing means (140) to further seal the one or more openings (130').

5. The photoelectric conversion module of claim 4, wherein the second substrate includes a first surface (120a) that extends beyond a peripheral edge (110b) of the first substrate and is arranged to receive the sealing member (160), the sealing member being arranged on the first surface to seal the peripheral edge (110b) of the first substrate.

6. The photoelectric conversion module of claim 5, further comprising second sealing means (170) arranged between the sealing member (160) and the first sealing means (140).

7. The photoelectric conversion module of claim 6, wherein the second sealing means (170) comprises a first portion between a first surface of the sealing member and the first surface (120a) of the second substrate, and a second portion on a second surface of the sealing member (160) facing the peripheral edge (110b) of the first substrate and a peripheral edge of the sealing layer (130).

8. The photoelectric conversion module of claim 7, wherein the first and second portions comprise a continuous structure.

9. The photoelectric conversion module of claim 7 or 8, wherein the second sealing means (170) further comprises an adhesive layer (171) and a blocking layer (172) for preventing leakage of the electrolyte (150).

10. The photoelectric conversion module of claim 9, wherein the blocking layer (172) is sandwiched between first and second adhesive layers (171).

11. The photoelectric conversion module of any one of the preceding claims, further comprising:
a photo electrode (111) on the first substrate;
a counter electrode (121) on the second substrate;
a catalyst layer (123) on the counter electrode; and
a semiconductor layer (113) including a photosensitive dye in each of the photoelectric cells.

12. The photoelectric conversion module of claim 11, further comprising connecting members (180) disposed between neighbouring photoelectric cells to electrically connect the photoelectric cells to one another, wherein the connecting members extend between the first and second substrates and are arranged to connect a photoelectrode of one cell to the counter electrode of the neighbouring cell.

13. The photoelectric conversion module of any one of the preceding claims, wherein the sealing layer comprises a plurality of openings (130'), each opening corresponding to one of the plurality of photoelectric cells (S).

14. The photoelectric conversion module of claim 13, wherein the plurality of photoelectric cells are longitudinally arranged between the substrates, and the sealing layer has a peripheral wall that comprises two substantially parallel long walls and two substantially parallel short walls, and the plurality of openings are arranged along one of the short walls of the sealing layer.

15. The photoelectric conversion module of claim 14, when dependent on claim 12, wherein the connecting members (180) extend along the length of the photoelectric cells in a portion (132) of the sealing layer (130) between neighbouring cells.
